# EUROPEAN PATENT SPECIFICATION

(11) **EP 3 886 466 B1**
(45) Date of publication and mention of the grant of the patent: **23.09.2026**
(21) Application number: 19894536.2
(22) Date of filing: 25.09.2019
(51) Int. Cl.: H04R 3/00, H04R 1/20, H04R 29/00, H04S 7/00

(54) **SMART LOUDSPEAKER BOX PLAYING METHOD AND DEVICE AND SMART LOUDSPEAKER BOX**
VERFAHREN UND VORRICHTUNG ZUM ABSPIELEN VON INTELLIGENTEN LAUTSPRECHERBOXEN UND INTELLIGENTE LAUTSPRECHERBOX
DISPOSITIF ET PROCÉDÉ D'UTILISATION DE CAISSON DE HAUT-PARLEUR INTELLIGENT ET CAISSON DE HAUT-PARLEUR INTELLIGENT

(30) Priority: 12.12.2018 CN 201811523871
(43) Date of publication of application: 29.09.2021
(73) Proprietor: Shenzhen Grandsun Electronic Co., Ltd., Shenzhen, Guangdong 518116 (CN)
(72) Inventor: CHEN, Fei, Shenzhen, Guangdong 518116 (CN); WU, Haiquan, Shenzhen, Guangdong 518116 (CN); CHI, Xin, Shenzhen, Guangdong 518116 (CN); ZHANG, Enqin, Shenzhen, Guangdong 518116 (CN); CAO, Lei, Shenzhen, Guangdong 518116 (CN); SHI, Ruiwen, Shenzhen, Guangdong 518116 (CN)
(74) Representative: Lewis Silkin LLP
(86) International application number: PCT/CN2019/107877
(87) International publication number: WO 2020/119220

(56) References cited:
- EP-A1- 3 467 819
- AU-A1- 2018 236 872
- CN-A- 101 656 908
- CN-A- 104 967 953
- CN-A- 106 535 059
- CN-A- 106 686 520
- CN-U- 207 382 538
- US-A1- 2018 352 334
- US-B1- 9 363 597
- SIMÓN GÁLVEZ MARCOS F. ET AL: "A superdirective array of phase shift sources", THE JOURNAL OF THE ACOUSTICAL SOCIETY OF AMERICA AMERICAN INSTITUTE OF PHYSICS, 2 HUNTINGTON QUADRANGLE, MELVILLE, NY 11747, vol. 132, no. 2, 1 August 2012 (2012-08-01), pages 746 - 756, XP012163179, ISSN: 0001-4966, [retrieved on 20120808], DOI: 10.1121/1.4733556

## Description

### TECHNICAL FIELD

The present application relates to the technical field of audio processing, and more particularly to a method and a device for playing a smart speaker and a smart speaker.

### BACKGROUND

With the development of technology, all kinds of smart home devices have gradually entered thousands of households, and smart speakers are just one of the smart home devices.

The smart speaker is an upgraded product of the traditional speaker, which can interact with users. For example, the user can use the voice to control the smart speaker to surf the Internet, such as on-demand songs, online shopping, or understanding the weather forecast and so on. The users can control the smart home devices through the smart speaker, such as opening curtains, setting the temperature of the refrigerator, or warming up the water heater in advance.

However, the focus of the existing smart speakers is how to add more functions to the smart speakers. There is not too much attention to the sound playing function of the smart speakers, and the intelligentization of the speakers fails to improve the sound playing effect of the smart speakers.

From prior art, document AU2018236872A1 is known, disclosing an electronic device including a display, one or more processors, and memory. The electronic device receives user input and, in response to receiving the user input, displays, on the display, a multi-device interface that includes: one or more indicators associated with a plurality of available playback devices that are connected to the device and available to initiate playback of media from the device, and a media playback status of the plurality of available playback devices.

Furthermore, document CN207382538U discloses a directional radio reception and directional pronunciation device including a cylindrical body whose upper surface is provided with a microphone array. Additionally, the side of the cylindrical body is provided with a loudspeaker array with a quantity of at least 3 that is arranged in the circumferential direction. The utility model simultaneously discloses a setup including a microphone array and a loudspeaker array in a directional radio reception and directional pronunciation device.

Furthermore, document US20180352334A1 discloses a method for adjusting audio being output through a beam forming loudspeaker array. Program audio is rendered to drive the loudspeaker array to produce sound beams having i) a main content pattern that is aimed at a listener, superimposed with ii) several diffuse content patterns that are aimed away from the listener. In response to receiving an alert message that refers to alert audio, the portion of the program audio in the main pattern is moved into the diffuse patterns, and the alert audio is rendered to drive the loudspeaker array so that the portion of the program audio in the main pattern is replaced with the alert audio.

Furthermore, document EP3467819A1 discloses a system based on a plurality of voice command devices, wherein each of the voice command devices comprises a processor unit, a transceiver coupled thereto and further coupled to a network, at least one microphone being configured to capture an audio signal, and at least one loudspeaker. In the disclosed method, the processor unit detects a speech signal in the captured audio signals and thereupon transmits directivity information with respect to the at least one microphone to a software as a service (SaaS) provider via the network. The processor unit is further configured to receive directivity information with respect to the plurality of voice command devices from the SaaS provider via the network using the transceiver. The article SIMON GALVEZ MARCOS F. ET AL: "A superdirective array of phase shift sources", THE JOURNAL OF THE ACOUSTICAL SOCIETY OF AMERICA AMERICAN INSTITUTE OF PHYSICS, 2 HUNTINGTON QUADRANGLE, MELVILLE, NY 11747, vol. 132, no. 2, 1 August 2012 (2012-08-01), pages 746-756, XP012163179,ISSN: 0001-4966, DOI: 10.1121/1.4733556, discloses loudspeaker arrays and acoustic contrast maximalisation between "bright zones" and "dark zones".

### TECHNICAL PROBLEM

In view of this, embodiments of the present application provide a method and a device for playing a smart speaker and a smart speaker, to solve the problem that the focus of the existing smart speakers is how to add more functions to the smart speakers, there is not too much attention to the sound playing function of the smart speakers, and the intelligentization of the speakers failed to improve the sound playing effect of the smart speakers.

### SUMMARY

A first aspect of an embodiment of the present application is to provide a method for playing a smart speaker comprising a plurality of speakers, the method including:
controlling each speaker in the smart speaker to output audio signals at a corresponding initial broadcast frequency, an initial broadcast amplitude and an initial broadcast phase when an azimuth angle of a user is not obtained;
calculating an actual broadcast amplitude and an actual broadcast phase of each speaker through a sound energy focusing algorithm, the azimuth angle of the user, a broadcast angle of each speaker and the initial broadcast frequency of each speaker when the azimuth angle of the user is obtained; and
controlling each speaker to output audio signals according to the corresponding initial broadcast frequency, the actual broadcast amplitude and the actual broadcast phase, to focus the output audio signals of the speakers in a direction where the user is located and reduce the sound energy output in other directions;
the sound energy focusing algorithm is a proximity solution method expressed as: ${λ}_{1} q = - {\left[{{Z}_{B}}^{H}{Z}_{B}\right]}^{- 1} \left[{{Z}_{D}}^{H}{Z}_{D}+{λ}_{2}I\right] q$
Z_{B} is the matrix formed by a sound transfer function in a bright area, Z_{D} is the matrix formed by the sound transfer function in a dark area, λ₁ is an eigenvalue of a matrix equation, λ₂ and I are adjustment parameters to avoid ill-conditioned problems when solving the matrix, and H represents the pseudo-inverse of the matrix, q is an output vector of the smart speaker, and a number of elements in the vector is a number of speakers.

A second aspect of an embodiment of the present application is to provide a smart speaker playing device, including:
an initial playing module, configured for controlling each speaker of a smart speaker comprising a plurality of speakers to output audio signals at a corresponding initial broadcast frequency, an initial broadcast amplitude and an initial broadcast phase when an azimuth angle of a user is not obtained;
a theory calculation module, configured for calculating an actual broadcast amplitude and an actual broadcast phase of each speaker through a sound energy focusing algorithm, the azimuth angle of the user, a broadcast angle of each speaker and the initial broadcast frequency of each speaker when the azimuth angle of the user is obtained; and
a sound orientation module, configured for controlling each speaker to output audio signals according to the corresponding initial broadcast frequency, the actual broadcast amplitude and the actual broadcast phase, to focus the output audio signals of the speakers in a direction where the user is located and reduce the sound energy output in other directions;
the sound energy focusing algorithm is a proximity solution method expressed as: ${λ}_{1} q = - {\left[{{Z}_{B}}^{H}{Z}_{B}\right]}^{- 1} \left[{{Z}_{D}}^{H}{Z}_{D}+{λ}_{2}I\right] q$
Z_{B} is the matrix formed by a sound transfer function in a bright area, Z_{D} is the matrix formed by the sound transfer function in a dark area, λ₁ is an eigenvalue of a matrix equation, λ₂ and I are adjustment parameters to avoid ill-conditioned problems when solving the matrix, and H represents the pseudo-inverse of the matrix, q is an output vector of the smart speaker, and a number of elements in the vector is a number of speakers.

A third aspect of an embodiment of the present application is to provide a smart speaker, including a plurality of speakers, a memory, a processor, and a computer program stored in the memory and configured to run on the processor, and the processor being configured to execute the computer program implementing steps of the method above mentioned.

A fourth aspect of an embodiment of the present application is to provide a computer-readable storage medium storing a computer program, wherein the computer program implements steps of the method above mentioned when the computer program is executed by a processor.

### BENEFICIAL EFFECTS

Compared with the prior art, the embodiments of the present application have the following beneficial effects:
The method for playing the smart speaker of the present application calculates the actual broadcast amplitude and actual broadcast phase of each speaker through the sound energy focusing algorithm, the azimuth angle of the user, the broadcast angle of each speaker, and controls each speaker to output audio signals according to the corresponding initial broadcasting frequency, the actual broadcast amplitude and actual broadcast phase, so as to achieve the directional focus of the same sound output, the output sound quality is better and the energy is stronger under the same output power, which solves the problem that the focus of existing smart speaker is how to add more functions to the smart speakers, there is not too much attention to the sound playing function of the smart speakers, and the intelligentization of the speakers failed to improve the sound playing effect of the smart speakers.

### BRIEF DESCRIPTION OF THE DRAWINGS

In order to explain the embodiments of the present invention more clearly, a brief introduction regarding the accompanying drawings that need to be used for describing the embodiments of the present invention or the prior art is given below; it is obvious that the accompanying drawings described as follows are only some embodiments of the present invention, for those skilled in the art, other drawings can also be obtained according to the current drawings on the premise of paying no creative labor.
FIG.1 is an implementing flowchart schematic view of a method for playing a smart speaker provided by an embodiment of the present application;
FIG. 2 is a schematic diagram of a smart speaker playing device provided by an embodiment of the present application;
FIG. 3 is a schematic diagram of a smart speaker provided by an embodiment of the present application; and
FIG. 4 is an example diagram of the use of a smart speaker provided by an embodiment of the present application.

### DETAILED DESCRIPTION

In the following description, for the purpose of illustration rather than limitation, specific details such as a specific system structure and technology are proposed for a thorough understanding of the embodiments of the present application. In other cases, detailed descriptions of well-known systems, devices, circuits, and methods are omitted to avoid unnecessary details from obstructing the description of the present application.

In order to illustrate the technical solution described in the present application, specific embodiments are used for description below.

It should be understood that when used in this specification and appended claims, the term "comprising" indicates the existence of the described features, wholes, steps, operations, elements and/or components, but does not exclude one or more other features, the existence or addition of a whole, a step, an operation, an element, a component, and/or a collection thereof.

It should also be understood that the terms used in the specification of the present application are only for the purpose of describing specific embodiments and are not intended to limit the present application. As used in the specification of the present application and the appended claims, unless the context clearly indicates other circumstances, the singular forms "a", "an" and "the" are intended to include plural forms.

It should be further understood that the term "and/or" used in the specification and appended claims of the present application refers to any combination of one or more of the items listed in association and all possible combinations, and includes these combinations .

As used in the present specification and the appended claims, the term "if" can be interpreted as "when" or "once" or "in response to determination" or "in response to detection" depending on the context. Similarly, the phrase "if determined" or "if detected [described condition or event]" can be interpreted as meaning "once determined" or "in response to determination" or "once detected [described condition or event] " or "in response to detection of [condition or event described]".

### Embodiment 1:

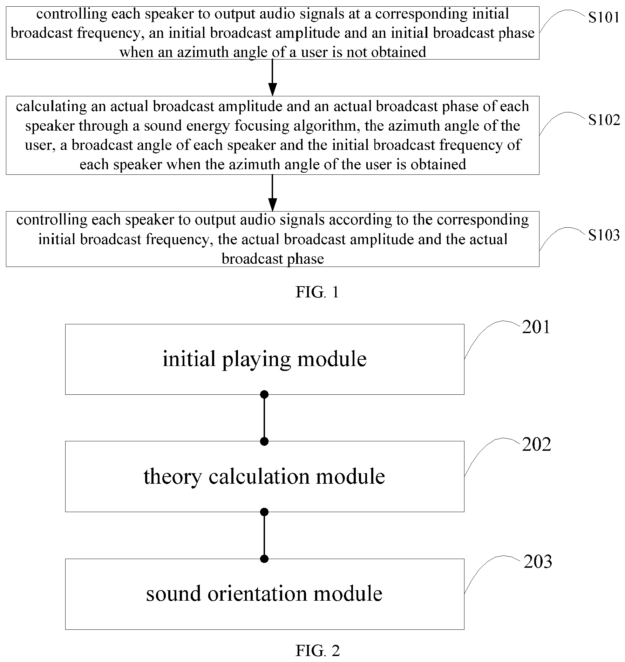

The following describes a method for playing a smart speaker provided in the embodiment 1 of the present application. Please refer to FIG. 1. The method for playing the smart speaker in the embodiment 1 of the present application includes:
Step S101: controlling each speaker to output audio signals at a corresponding initial broadcast frequency, an initial broadcast amplitude and an initial broadcast phase when an azimuth angle of a user is not obtained;
The main function of the smart speaker is still sound playing, rather than various human-computer interaction functions. However, the current product upgrades of the smart speaker are mainly carried out around the human-computer interaction function, without considering how to use the intelligence of the speakers to improve the effect of sound playing.

Therefore, the embodiment proposes a method for playing the smart speaker. By a adjusting the actual broadcast amplitude and actual broadcast phase output by each speaker of the smart speaker, the sound played by the speaker can be oriented and focused in the direction where the user is located. Under the same output power, the users can hear better quality and stronger sound

Before adjusting the output of each speaker, you need to obtain the azimuth angle of the user. The smart speaker can use a specified direction as a reference direction and the reference direction is acted as the 0 degree angle to determine the azimuth angle of the user.

When the azimuth angle of the user is not obtained, each speaker can be controlled to output audio signals at the corresponding initial broadcast frequency, the initial broadcast amplitude, and the initial broadcast phase. For example, each speaker can be controlled to use the initial broadcast frequency, the same broadcast frequency, and the same broadcast phase to output audio signals, and controls the audio signals to be output evenly in each speaker.

Step S102: calculating an actual broadcast amplitude and an actual broadcast phase of each speaker through a sound energy focusing algorithm, the azimuth angle of the user, a broadcast angle of each speaker and the initial broadcast frequency of each speaker when the azimuth angle of the user is obtained

When the azimuth angle of the user is obtained, the actual broadcast amplitude and actual broadcast phase of each speaker can be calculated by the sound energy focusing algorithm, the azimuth angle of the user, the broadcast angle of each speaker, and the initial broadcast frequency of each speaker.

Step S103: controlling each speaker to output audio signals according to the corresponding initial broadcast frequency, the actual broadcast amplitude and the actual broadcast phase.

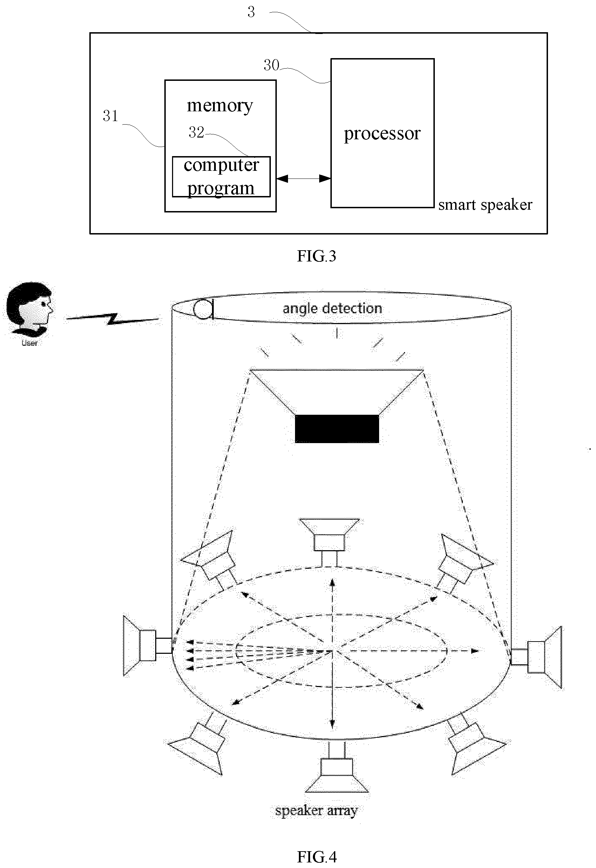

After calculating the actual broadcast amplitude and actual broadcast phase of each speaker, each speaker can be controlled to output audio signals at the corresponding initial broadcast frequency, the actual broadcast amplitude, and the actual broadcast phase, so that the sound can be focused and propagated in the direction where the user is located. For example, the broadcast structure of a smart speaker can be as shown in Figure 4, a speaker array composed of multiple speakers, each speaker can be same or different speakers, each speaker is arranged in a ring array, that is, the speakers are arranged on a circle at equal intervals, a woofer is set above or below the ring array of speakers. The low-frequency part of the sound is output by the woofer, and the sound of other frequency bands is output by the directional focus of the annular array of speakers. When the actual broadcast amplitude and actual broadcast phase corresponding to each speaker are calculated, the filter parameters of each speaker are adjusted to make each speaker output audio signals at the corresponding initial broadcast frequency, actual broadcast amplitude and actual broadcast phase, so that the output sound of the speaker is focused in the direction where the user is located, and the sound energy output in other directions is reduced.

The method for playing the smart speaker of the present application calculates the actual broadcast amplitude and actual broadcast phase of each speaker through the sound energy focusing algorithm, the azimuth angle of the user, the broadcast angle of each speaker, and controls each speaker to output audio signals according to the corresponding initial broadcasting frequency, the actual broadcast amplitude and actual broadcast phase, so as to achieve the directional focus of the same sound output, the output sound quality is better and the energy is stronger under the same output power, which solves the problem that the focus of existing smart speaker is how to add more functions to the smart speakers, there is not too much attention to the sound playing function of the smart speakers, and the intelligentization of the speakers failed to improve the sound playing effect of the smart speakers

Further, the azimuth angle of the user is obtained by the following method:
A1: calculating the azimuth angle of the user through a position of each microphone in a microphone array and a voice amplitude of the user received by each microphone.

The azimuth angle of the user can be obtained through the microphone array. When the smart speaker receives the voice of the user through the microphone array, the azimuth angle of the user can be calculated by the position of each microphone in the microphone array and a voice amplitude of the user received by each microphone, for example, as shown in FIG .4, when the user enters the room and says "play music", when the smart speaker receives the voice of the user through the microphone array, it can not only perform the semantic recognition, playing music of the obtained voice, but also perform the angle detecting to the azimuth angle of the user according to the voice amplitude of the user received by each microphone in the microphone array. Due to the difference in the position of each microphone, the voice amplitudes of the user received by each microphone are also different. The voice amplitude of the user can be processed and analyzed to obtain the azimuth angle of the user.

And/or, the azimuth angle of the user can be obtained by the following method:
B1: performing real-time monitoring to a shooting screen of a camera, and calculating the azimuth angle of the user according to a shooting angle of the camera and a position of a user image in the shooting screen of the camera if the user image appearing in the shooting screen of the camera is detected.

In addition to obtaining the azimuth angle of the user through the microphone array, the azimuth angle of the user can also be obtained through the camera, and performing real-time monitoring to a shooting screen of the camera, if the user image appears in the shooting screen, then the azimuth angle of the user can be calculated according to the shooting angle of the camera and the position of the user image in the shooting screen of the camera. For example, a wide-angle camera with a shooting angle of 120 degrees can be used as the camera, the leftmost side of the shooting screen is used as the reference direction, and the angle is set to 0 degrees, and when the user image appears in the middle of the shooting screen, the azimuth angle of the user is 60 degrees.

In the actual application process, in addition to the microphone array and the camera, the azimuth angle of the user can also be obtained in other ways. The above methods are only some examples of the method of obtaining the azimuth angle of the user, and which does not limit the method of obtaining the azimuth angle of the user.

Further, the sound energy focusing algorithm is specifically a proximity solution method . Non-claimed alternative are a direct solution method or an energy difference maximization solution method.

The sound energy focusing algorithm chooses the proximity solution method according to the actual situation. The proximity solution method is expressed as: ${λ}_{1} q = - {\left[{{Z}_{B}}^{H}{Z}_{B}\right]}^{- 1} \left[{{Z}_{D}}^{H}{Z}_{D}+{λ}_{2}I\right] q$

Among them, Z_{B} is the matrix formed by a sound transfer function in a bright area, Z_{D} is the matrix formed by the sound transfer function in a dark area, λ₁ is an eigenvalue of a matrix equation, λ₂ and I are adjustment parameters to avoid ill-conditioned problems when solving the matrix, and H represents the pseudo-inverse of the matrix, q is an output vector of the speaker, and a number of elements in the vector is a number of speakers.

The direct solution method can be expressed as: ${λ}_{1} q = {\left[{{Z}_{D}}^{H}{Z}_{D}\right]}^{- 1} \left[{{Z}_{B}}^{H}{Z}_{B}-{λ}_{2}I\right] q$

The energy difference maximization solution method can be expressed as: ${λ}_{1} q = - \left[{{Z}_{B}}^{H}{Z}_{B}-{{αZ}_{D}}^{H}{Z}_{D}\right] q$

Among them, α is an operator introduced to calculate the energy difference between the bright area and the dark area.

In the method for playing the smart speaker provided in the embodiment 1, the actual broadcast amplitude and actual broadcast phase of each speaker is calculated through the sound energy focusing algorithm, the azimuth angle of the user, the broadcast angle of each speaker, and controls each speaker to output audio signals according to the corresponding initial broadcasting frequency, the actual broadcast amplitude and actual broadcast phase, so as to achieve the directional focus of the same sound output, the output sound quality is better and the energy is stronger under the same output power, which solves the problem that the focus of existing smart speaker is how to add more functions to the smart speakers, there is not too much attention to the sound playing function of the smart speakers, and the intelligentization of the speakers failed to improve the sound playing effect of the smart speakers.

The azimuth angle of the user can be calculated based on the position of each microphone in the microphone array and the voice amplitude of the user received by each microphone, or it can be calculated based on the shooting angle of the camera and the position of the user image in the shooting screen.

The sound energy focusing algorithm can choose one of the sound energy focusing algorithms such as the proximity solution method, the direct solution method and the energy difference maximization solution method according to the actual situation.

It should be understood that the size of the sequence number of each step in the foregoing embodiment does not mean the order of execution, and the execution sequence of each process should be determined by its function and internal logic, and should not constitute any limitation on the implementation process of the embodiment of the present application.

### Embodiment 2:

Embodiment 2 of the present application provides a smart speaker playing device. For ease of illustration, only the parts related to the present application are shown. As shown in FIG. 2, the smart speaker playing device includes:
an initial playing module 201, configured for controlling each speaker to output audio signals at a corresponding initial broadcast frequency, an initial broadcast amplitude and an initial broadcast phase when an azimuth angle of a user is not obtained;
a theory calculation module 202, configured for calculating an actual broadcast amplitude and an actual broadcast phase of each speaker through a sound energy focusing algorithm, the azimuth angle of the user, a broadcast angle of each speaker and the initial broadcast frequency of each speaker when the azimuth angle of the user is obtained; and
a sound orientation module 203, configured for controlling each speaker to output audio signals according to the corresponding initial broadcast frequency, the actual broadcast amplitude and the actual broadcast phase.

Further, the device further includes:
a microphone positioning module, configured for calculating the azimuth angle of the user through a position of each microphone in a microphone array and a voice amplitude of the user received by each microphone.

And /or, the device further includes:
a camera positioning module, configured for performing real-time monitoring to a shooting screen of a camera, and calculating the azimuth angle of the user according to a shooting angle of the camera and a position of a user image in the shooting screen of the camera if the user image appearing in the shooting screen of the camera is detected.

Further, the sound energy focusing algorithm is specifically a proximity solution method, a direct solution method, or an energy difference maximization solution method

It should be noted that the information interaction and execution process between the above-mentioned devices/units are based on the same concept as the method embodiment of the present application, and its specific functions and technical effects can be found in the method embodiment section for details, which will not be repeated herein.

### Embodiment 3:

FIG. 3 is a schematic diagram of a smart speaker provided in the embodiment 3 of the present application. As shown in FIG. 3, the smart speaker 3 of the present embodiment includes: a processor 30, a memory 31, and a computer program 32 stored in the memory 31 and running on the processor 30. The processor 30 implements the steps in the embodiment of the method for playing the smart speaker when the computer program 32 is executed, such as steps S101 to S103 shown in FIG. 1. Alternatively, when the processor 30 executes the computer program 32, the functions of the modules/units in the foregoing device embodiments, for example, the functions of the modules 201 to 203 shown in FIG. 2 are realized.

Exemplarily, the computer program 32 may be divided into one or more modules/units, and the one or more modules/units are stored in the memory 31 and executed by the processor 30 to complete the present application. The one or more modules/units may be a series of computer program instruction segments capable of completing specific functions, and the instruction segments are used to describe the execution process of the computer program 32 in the smart speaker 3. For example, the computer program 32 can be divided into an initial playing module, a theory calculation module, and a sound orientation module. The specific functions of each module are as follows:
The initial playing module is configured for controlling each speaker to output audio signals at a corresponding initial broadcast frequency, initial broadcast amplitude and initial broadcast phase when an azimuth angle of a user is not obtained;
The theory calculation module is configured for calculating an actual broadcast amplitude and an actual broadcast phase of each speaker through a sound energy focusing algorithm, the azimuth angle of the user, a broadcast angle of each speaker and the initial broadcast frequency of each speaker when the azimuth angle of the user is obtained; and
The sound orientation module is configured for controlling each speaker to output audio signals according to the corresponding initial broadcast frequency, the actual broadcast amplitude and the actual broadcast phase.

The smart speaker may include, but is not limited to, the processor 30, the memory 31. It can be understood for one of ordinary skill in the art that, FIG. 3 is merely an example of the smart speaker 3, and is not constituted as limitation to the smart speaker 3, more or less components shown in FIG. 3 can be included, or some components or different components can be combined; for example, the terminal device for determining wellbore cross-sectional shape can also include an input and output device, a network access device, a bus, etc.

The so-called processor 30 can be CPU (Central Processing Unit), and can also be other general purpose processor, DSP (Digital Signal Processor), ASIC (Application Specific Integrated Circuit), FGPA (Field-Programmable Gate Array), or some other programmable logic devices, discrete gate or transistor logic device, discrete hardware component, etc. The general purpose processor can be a microprocessor, or alternatively, the processor can also be any conventional processor and so on.

The memory 31 can be an internal storage unit of the smart speaker 3, such as a hard disk or a memory of the smart speaker 3. The memory 31 can also be an external storage device of the smart speaker 3, such as a plug-in hard disk, a SMC (Smart Media Card), a SD (Secure Digital) card, a FC (Flash Card) equipped on the measuring device 10. Further, the memory 31 may include both the internal storage unit and the external storage device of the smart speaker 3, either. The memory 31 is configured to store the computer programs, and other procedures and data needed by the smart speaker 3 for determining wellbore cross-sectional shape. The memory 31 can also be configured to storing data that has been output or being ready to be output temporarily.

It can be clearly understood by the persons skilled in the art that, for describing conveniently and concisely, dividing of the aforesaid various functional units, functional modules is described exemplarily merely, in an actual application, the aforesaid functions can be assigned to different functional units and functional modules to be accomplished, that is, an inner structure of a data synchronizing device is divided into functional units or modules so as to accomplish the whole or a part of functionalities described above. The various functional units, modules in the embodiments can be integrated into a processing unit, or each of the units exists independently and physically, or two or more than two of the units are integrated into a single unit. The aforesaid integrated unit can by either actualized in the form of hardware or in the form of software functional units. In addition, specific names of the various functional units and modules are only used for distinguishing from each other conveniently, but not intended to limit the protection scope of the present application. Regarding a specific working process of the units and modules in the aforesaid device, reference can be made to a corresponding process in the aforesaid method embodiments, it is not repeatedly described herein.

In the aforesaid embodiments, the description of each of the embodiments is emphasized respectively, regarding a part of one embodiment which isn't described or disclosed in detail, please refer to relevant descriptions in some other embodiments.

Those skilled in the art may aware that, the elements and algorithm steps of each of the examples described in connection with the embodiments disclosed herein can be implemented in electronic hardware, or in combination with computer software and electronic hardware. Whether these functions are implemented by hardware or software depends on the specific application and design constraints of the technical solution. The skilled people could use different methods to implement the described functions for each particular application, however, such implementations should not be considered as going beyond the scope of the present application.

It should be understood that, in the embodiments of the present application, the disclosed device/terminal device and method could be implemented in other ways. For example, the device described above are merely illustrative; for example, the division of the units is only a logical function division, and other division could be used in the actual implementation, for example, multiple units or components could be combined or integrated into another system, or some features can be ignored, or not performed. In another aspect, the coupling or direct coupling or communicating connection shown or discussed could be an indirect, or a communicating connection through some interfaces, devices or units, which could be electrical, mechanical, or otherwise.

The units described as separate components could or could not be physically separate, the components shown as units could or could not be physical units, which can be located in one place, or can be distributed to multiple network elements. Parts or all of the elements could be selected according to the actual needs to achieve the object of the present embodiment.

In addition, the various functional units in each of the embodiments of the present application can be integrated into a single processing unit, or exist individually and physically, or two or more than two units are integrated into a single unit. The aforesaid integrated unit can either be achieved by hardware, or be achieved in the form of software functional units.

If the integrated unit is achieved in the form of software functional units, and is sold or used as an independent product, it can be stored in a computer readable storage medium. Based on this understanding, a whole or part of flow process of implementing the method in the aforesaid embodiments of the present application can also be accomplished by using computer program to instruct relevant hardware. When the computer program is executed by the processor, the steps in the various method embodiments described above can be implemented. Wherein, the computer program comprises computer program codes, which can be in the form of source code, object code, executable documents or some intermediate form, etc. The computer readable medium can include: any entity or device that can carry the computer program codes, recording medium, USB flash disk, mobile hard disk, hard disk, optical disk, computer storage device, ROM (Read-Only Memory), RAM (Random Access Memory), electrical carrier signal, telecommunication signal and software distribution medium, etc. It needs to be explained that the contents contained in the computer readable medium can be added or reduced appropriately according to the requirement of legislation and patent practice in a judicial district, for example, in some judicial districts, according to legislation and patent practice, the computer readable medium doesn't include electrical carrier signal and telecommunication signal.

## Claims

1. A method for playing a smart speaker (3) comprising a plurality of speakers, the method comprising:
controlling (S101) each speaker in the smart speaker to output audio signals at a corresponding initial broadcast frequency, an initial broadcast amplitude and an initial broadcast phase when an azimuth angle of a user is not obtained;
calculating (S102) an actual broadcast amplitude and an actual broadcast phase of each speaker through a sound energy focusing algorithm, the azimuth angle of the user, a broadcast angle of each speaker and the initial broadcast frequency of each speaker when the azimuth angle of the user is obtained; and
controlling (S103)
each speaker to output audio signals according to the corresponding initial broadcast frequency, the actual broadcast amplitude and the actual broadcast phase, to focus the output audio signals of the speakers in a direction where the user is located and reduce the sound energy output in other directions,
wherein the sound energy focusing algorithm is a proximity solution method expressed as: ${λ}_{1} q = - {\left[{{Z}_{B}}^{H}{Z}_{B}\right]}^{- 1} \left[{{Z}_{D}}^{H}{Z}_{D}+{λ}_{2}I\right] q$
wherein Z_{B} is the matrix formed by a sound transfer function in a bright area, Z_{D} is the matrix formed by the sound transfer function in a dark area, λ₁ is an eigenvalue of a matrix equation, λ₂ and I are adjustment parameters to avoid ill-conditioned problems when solving the matrix, and H represents the pseudo-inverse of the matrix, q is an output vector of the smart speaker, and a number of elements in the vector is a number of speakers.

2. The method of claim 1, wherein the azimuth angle of the user is obtained as following:
calculating the azimuth angle of the user through a position of each microphone in a microphone array and a voice amplitude of the user received by each microphone.

3. The method of claim 1, wherein the azimuth angle of the user is further obtained as following:
performing real-time monitoring to a shooting screen of a camera, and calculating the azimuth angle of the user according to a shooting angle of the camera and a position of a user image in the shooting screen of the camera if the user image appearing in the shooting screen of the camera is detected.

4. A smart speaker playing device, comprising:
an initial playing module (201), configured for controlling each speaker of a smart speaker comprising a plurality of speakers to output audio signals at a corresponding initial broadcast frequency, an initial broadcast amplitude and an initial broadcast phase when an azimuth angle of a user is not obtained;
a theory calculation module (202), configured for calculating an actual broadcast amplitude and an actual broadcast phase of each speaker through a sound energy focusing algorithm, the azimuth angle of the user, a broadcast angle of each speaker and the initial broadcast frequency of each speaker when the azimuth angle of the user is obtained; and
a sound orientation module (203), configured for controlling each speaker to output audio signals according to the corresponding initial broadcast frequency, the actual broadcast amplitude and the actual broadcast phase, to focus the output audio signals of the speakers in a direction where the user is located and reduce the sound energy output in other directions,
wherein the sound energy focusing algorithm is a proximity solution method expressed as: ${λ}_{1} q = - {\left[{{Z}_{B}}^{H}{Z}_{B}\right]}^{- 1} \left[{{Z}_{D}}^{H}{Z}_{D}+{λ}_{2}I\right] q$
wherein Z_{B} is the matrix formed by a sound transfer function in a bright area, Z_{D} is the matrix formed by the sound transfer function in a dark area, λ₁ is an eigenvalue of a matrix equation, λ₂ and I are adjustment parameters to avoid ill-conditioned problems when solving the matrix, and H represents the pseudo-inverse of the matrix, q is an output vector of the smart speaker, and a number of elements in the vector is a number of speakers.

5. The smart speaker playing device of claim 4, wherein the device further comprises:
a microphone positioning module, configured for calculating the azimuth angle of the user through a position of each microphone in a microphone array and a voice amplitude of the user received by each microphone.

6. The smart speaker playing device of claim 4, wherein the device further comprises:
a camera positioning module, configured for performing real-time monitoring to a shooting screen of a camera, and calculating the azimuth angle of the user according to a shooting angle of the camera and a position of a user image in the shooting screen of the camera if the user image appearing in the shooting screen of the camera is detected.

7. A smart speaker comprising a plurality of speakers, a memory (31), a processor (30), and a computer program (32) stored in the memory (31) and configured to run on the processor (30), wherein the processor (30) is configured to execute the computer program (32) implementing steps of the method according to any one of claims 1 to 3.

8. A computer-readable storage medium storing a computer program, wherein the computer program implements steps of the method according to any one of claims 1 to 3 when the computer program is executed by a processor.

## Patentansprüche

1. Verfahren zum Wiedergeben mittels eines intelligenten Lautsprechers (3), der mehrere Lautsprecher umfasst, wobei das Verfahren Folgendes umfasst:
Steuern (S101) jedes Lautsprechers in dem intelligenten Lautsprecher zum Ausgeben von Audiosignalen mit einer entsprechenden anfänglichen Abstrahlfrequenz, einer anfänglichen Abstrahlamplitude und einer anfänglichen Abstrahlphase, wenn kein Azimutwinkel eines Benutzers erhalten wird;
Berechnen (S102) einer tatsächlichen Abstrahlamplitude und einer tatsächlichen Abstrahlphase jedes Lautsprechers durch einen Schallenergiefokussierungsalgorithmus, den Azimutwinkel des Benutzers, einen Abstrahlwinkel jedes Lautsprechers und die anfängliche Abstrahlfrequenz jedes Lautsprechers, wenn der Azimutwinkel des Benutzers erhalten wird; und
Steuern (S103) jedes Lautsprechers zum Ausgeben von Audiosignalen gemäß der entsprechenden anfänglichen Abstrahlfrequenz, der tatsächlichen Abstrahlamplitude und der tatsächlichen Abstrahlphase, um die ausgegebenen Audiosignale der Lautsprecher in eine Richtung zu fokussieren, in der sich der Benutzer befindet, und die in andere Richtungen ausgegebene Schallenergie zu verringern,
wobei der Schallenergiefokussierungsalgorithmus ein Näherungslösungsverfahren ist, das wie folgt ausgedrückt wird: ${λ}_{1} q = - {\left[{{Z}_{B}}^{H}{Z}_{B}\right]}^{- 1} \left[{{Z}_{D}}^{H}{Z}_{D}+{λ}_{2}I\right] q$
wobei Z_{B} die durch eine Schallübertragungsfunktion in einem hellen Bereich gebildete Matrix ist, Z_{D} die durch die Schallübertragungsfunktion in einem dunklen Bereich gebildete Matrix ist, λ₁ ein Eigenwert einer Matrixgleichung ist, λ₂ und I Anpassungsparameter sind, um schlecht konditionierte Probleme beim Lösen der Matrix zu vermeiden, und H die Pseudoinverse der Matrix darstellt, q ein Ausgabevektor des intelligenten Lautsprechers ist und eine Anzahl von Elementen in dem Vektor eine Anzahl von Lautsprechern ist.

2. Verfahren nach Anspruch 1, wobei der Azimutwinkel des Benutzers wie folgt erhalten wird:
Berechnen des Azimutwinkels des Benutzers durch eine Position jedes Mikrofons in einem Mikrofonarray und eine durch jedes Mikrofon empfangene Stimmamplitude des Benutzers.

3. Verfahren nach Anspruch 1, wobei der Azimutwinkel des Benutzers ferner wie folgt erhalten wird:
Durchführen einer Echtzeitüberwachung an einem Aufnahmebildschirm einer Kamera und Berechnen des Azimutwinkels des Benutzers gemäß einem Aufnahmewinkel der Kamera und einer Position eines Benutzerbilds in dem Aufnahmebildschirm der Kamera, wenn das in dem Aufnahmebildschirm der Kamera erscheinende Benutzerbild detektiert wird.

4. Intelligente Lautsprecherwiedergabevorrichtung, die Folgendes umfasst:
ein Anfangswiedergabemodul (201), das zum Steuern jedes Lautsprechers eines intelligenten Lautsprechers, der mehrere Lautsprecher umfasst, zum Ausgeben von Audiosignalen mit einer entsprechenden anfänglichen Abstrahlfrequenz, einer anfänglichen Abstrahlamplitude und einer anfänglichen Abstrahlphase, wenn kein Azimutwinkel eines Benutzers erhalten wird, konfiguriert ist;
ein Theorieberechnungsmodul (202), das zum Berechnen einer tatsächlichen Abstrahlamplitude und einer tatsächlichen Abstrahlphase jedes Lautsprechers durch einen Schallenergiefokussierungsalgorithmus, den Azimutwinkel des Benutzers, einen Abstrahlwinkel jedes Lautsprechers und die anfängliche Abstrahlfrequenz jedes Lautsprechers, wenn der Azimutwinkel des Benutzers erhalten wird, konfiguriert ist; und
ein Schallausrichtungsmodul (203), das zum Steuern jedes Lautsprechers zum Ausgeben von Audiosignalen gemäß der entsprechenden anfänglichen Abstrahlfrequenz, der tatsächlichen Abstrahlamplitude und der tatsächlichen Abstrahlphase, um die ausgegebenen Audiosignale der Lautsprecher in eine Richtung zu fokussieren, in der sich der Benutzer befindet, und die in andere Richtungen ausgegebene Schallenergie zu verringern, konfiguriert ist,
wobei der Schallenergiefokussierungsalgorithmus ein Näherungslösungsverfahren ist, das wie folgt ausgedrückt wird: ${λ}_{1} q = - {\left[{{Z}_{B}}^{H}{Z}_{B}\right]}^{- 1} \left[{{Z}_{D}}^{H}{Z}_{D}+{λ}_{2}I\right] q$
wobei Z_{B} die durch eine Schallübertragungsfunktion in einem hellen Bereich gebildete Matrix ist, Z_{D} die durch die Schallübertragungsfunktion in einem dunklen Bereich gebildete Matrix ist, λ₁ ein Eigenwert einer Matrixgleichung ist, λ₂ und I Anpassungsparameter sind, um schlecht konditionierte Probleme beim Lösen der Matrix zu vermeiden, und H die Pseudoinverse der Matrix darstellt, q ein Ausgabevektor des intelligenten Lautsprechers ist und eine Anzahl von Elementen in dem Vektor eine Anzahl von Lautsprechern ist.

5. Intelligente Lautsprecherwiedergabevorrichtung nach Anspruch 4, wobei die Vorrichtung ferner Folgendes umfasst:
ein Mikrofonpositionierungsmodul, das zum Berechnen des Azimutwinkels des Benutzers durch eine Position jedes Mikrofons in einem Mikrofonarray und eine durch jedes Mikrofon empfangene Stimmamplitude des Benutzers konfiguriert ist.

6. Intelligente Lautsprecherwiedergabevorrichtung nach Anspruch 4, wobei die Vorrichtung ferner Folgendes umfasst:
ein Kamerapositionierungsmodul, das zum Durchführen einer Echtzeitüberwachung an einem Aufnahmebildschirm einer Kamera und Berechnen des Azimutwinkels des Benutzers gemäß einem Aufnahmewinkel der Kamera und einer Position eines Benutzerbilds in dem Aufnahmebildschirm der Kamera, wenn das in dem Aufnahmebildschirm der Kamera erscheinende Benutzerbild detektiert wird, konfiguriert ist.

7. Intelligenter Lautsprecher, der mehrere Lautsprecher, einen Speicher (31), einen Prozessor (30) und ein in dem Speicher (31) gespeichertes und zum Laufen auf dem Prozessor (30) konfiguriertes Computerprogramm (32) umfasst, wobei der Prozessor (30) dazu konfiguriert ist, das Computerprogramm (32), das Schritte des Verfahrens nach einem der Ansprüche 1 bis 3 implementiert, auszuführen.

8. Computerlesbares Speichermedium, das ein Computerprogramm speichert, wobei das Computerprogramm Schritte des Verfahrens nach einem der Ansprüche 1 bis 3 implementiert, wenn das Computerprogramm durch einen Prozessor ausgeführt wird.

## Revendications

1. Procédé de commande d'une enceinte intelligente (3) comprenant une pluralité de haut-parleurs, le procédé comprenant les étapes suivantes :
commander (S101) chaque haut-parleur dans l'enceinte intelligente afin de délivrer en sortie des signaux audio à une fréquence de diffusion initiale correspondante, une amplitude de diffusion initiale et une phase de diffusion initiale lorsqu'un angle d'azimut d'un utilisateur n'est pas obtenu ;
calculer (S102) une amplitude de diffusion réelle et une phase de diffusion réelle de chaque haut-parleur au travers d'un algorithme de focalisation d'énergie sonore, de l'angle d'azimut de l'utilisateur, d'un angle de diffusion de chaque haut-parleur et de la fréquence de diffusion initiale de chaque haut-parleur lorsque l'angle d'azimut de l'utilisateur est obtenu ; et
commander (S103) chaque haut-parleur pour qu'il délivre en sortie des signaux audio conformément à la fréquence de diffusion initiale correspondante, à l'amplitude de diffusion réelle et à la phase de diffusion réelle, pour focaliser les signaux audio de sortie des haut-parleurs dans une direction où se trouve l'utilisateur et réduire l'énergie sonore émise dans d'autres directions,
où l'algorithme de focalisation de l'énergie sonore est un procédé de solution de proximité exprimé par : ${λ}_{1} q = - {\left[{{Z}_{B}}^{H}{Z}_{B}\right]}^{- 1} \left[{{Z}_{D}}^{H}{Z}_{D}+{λ}_{2}I\right] q$
où Z_{B} est la matrice formée par une fonction de transfert acoustique en zone d'écoute, Z_{D} est la matrice formée par la fonction de transfert acoustique en zone silencieuse, λ₁ est une valeur propre d'une équation matricielle, λ₂ et I sont des paramètres d'ajustement pour éviter des problèmes de mauvais conditionnement lors de la résolution de la matrice, et H représente le pseudo-inverse de la matrice, q est un vecteur de sortie de l'enceinte intelligente, et un certain nombre d'éléments dans le vecteur est égal au nombre de haut-parleurs.

2. Procédé selon la revendication 1, dans lequel l'angle d'azimut de l'utilisateur est obtenu par :
le calcul de l'angle d'azimut de l'utilisateur par la position de chaque microphone dans un réseau de microphones et l'amplitude vocale de l'utilisateur reçue par chaque microphone.

3. Procédé selon la revendication 1, dans lequel l'angle d'azimut de l'utilisateur est en outre obtenu par :
la réalisation d'une surveillance en temps réel d'un écran de prise de vue d'une caméra, et le calcul de l'angle d'azimut de l'utilisateur en fonction d'un angle de prise de vue de la caméra et d'une position d'une image d'utilisateur dans l'écran de prise de vue de la caméra si l'image d'utilisateur apparaissant dans l'écran de prise de vue de la caméra est détectée.

4. Dispositif de commande d'une enceinte intelligente, comprenant :
un module de commande initial (201), configuré pour commander chaque haut-parleur d'une enceinte intelligente comprenant une pluralité de haut-parleurs afin de délivrer en sortie des signaux audio à une fréquence de diffusion initiale correspondante, une amplitude de diffusion initiale et une phase de diffusion initiale lorsqu'un angle d'azimut d'un utilisateur n'est pas obtenu ;
un module de calcul théorique (202), configuré pour calculer une amplitude de diffusion réelle et une phase de diffusion réelle de chaque haut-parleur au travers d'un algorithme de focalisation d'énergie sonore, de l'angle d'azimut de l'utilisateur, d'un angle de diffusion de chaque haut-parleur et de la fréquence de diffusion initiale de chaque haut-parleur lorsque l'angle d'azimut de l'utilisateur est obtenu ; et
un module d'orientation sonore (203), configuré pour commander chaque haut-parleur pour qu'il délivre en sortie des signaux audio conformément à la fréquence de diffusion initiale correspondante, à l'amplitude de diffusion réelle et à la phase de diffusion réelle, pour focaliser les signaux audio de sortie des haut-parleurs dans une direction où se trouve l'utilisateur et réduire l'énergie sonore émise dans d'autres directions,
où l'algorithme de focalisation de l'énergie sonore est un procédé de solution de proximité exprimé par : ${λ}_{1} q = - {\left[{{Z}_{B}}^{H}{Z}_{B}\right]}^{- 1} \left[{{Z}_{D}}^{H}{Z}_{D}+{λ}_{2}I\right] q$
où Z_{B} est la matrice formée par une fonction de transfert acoustique en zone d'écoute, Z_{D} est la matrice formée par la fonction de transfert acoustique en zone silencieuse, λ₁ est une valeur propre d'une équation matricielle, λ₂ et I sont des paramètres d'ajustement pour éviter des problèmes de mauvais conditionnement lors de la résolution de la matrice, et H représente le pseudo-inverse de la matrice, q est un vecteur de sortie de l'enceinte intelligente, et un certain nombre d'éléments dans le vecteur est égal au nombre de haut-parleurs.

5. Dispositif de commande d'une enceinte intelligente selon la revendication 4, le dispositif comprenant en outre :
un module de positionnement de microphone conçu pour calculer l'angle d'azimut de l'utilisateur par la position de chaque microphone dans un réseau de microphones et l'amplitude vocale de l'utilisateur reçue par chaque microphone.

6. Dispositif de commande d'une enceinte intelligente selon la revendication 4, le dispositif comprenant en outre :
un module de positionnement de caméra conçu pour effectuer une surveillance en temps réel d'un écran de prise de vue d'une caméra, et le calcul de l'angle d'azimut de l'utilisateur en fonction d'un angle de prise de vue de la caméra et d'une position d'une image d'utilisateur dans l'écran de prise de vue de la caméra si l'image d'utilisateur apparaissant dans l'écran de prise de vue de la caméra est détectée.

7. Enceinte intelligente comprenant une pluralité de haut-parleurs, une mémoire (31), un processeur (30), et un programme d'ordinateur (32) stocké dans la mémoire (31) et configuré pour s'exécuter sur le processeur (30), le processeur (30) étant configuré pour exécuter le programme d'ordinateur (32) mettant en œuvre les étapes du procédé selon l'une quelconque des revendications 1 à 3.

8. Support de stockage lisible par ordinateur stockant un programme d'ordinateur, le programme d'ordinateur mettant en œuvre les étapes du procédé selon l'une quelconque des revendications 1 à 3 lorsque le programme d'ordinateur est exécuté par un processeur.
